# EUROPÄISCHE PATENTSCHRIFT

(11) **EP 0 640 273 B1**
(45) Veröffentlichungstag und Bekanntmachung des Hinweises auf die Patenterteilung: **06.03.1996**
(21) Anmeldenummer: 94112689.8
(22) Anmeldetag: 13.08.1994
(51) Int. Cl.: A01B 69/02

(54) **Spurmarkierer**
Row marker
Marqueur de traçage

(30) Priorität: 24.08.1993 US 111370
(43) Veröffentlichungstag der Anmeldung: 01.03.1995
(73) Patentinhaber: DEERE & COMPANY, Moline, Illinois 61265 (US)
(72) Erfinder: Snyder, Michael D., Bettendorf, Iowa 52722 (US)
(74) Vertreter: Feldmann, Bernhard

(56) Entgegenhaltungen:
- US-A- 4 449 590
- US-A- 4 986 367

## Beschreibung

Die Erfindung bezieht sich auf einen zwischen einer Betriebsstellung und einer Ruhestellung klappbaren Spurmarkierer für ein landwirtschaftliches Gerät mit einem an das Gerät anlenkbaren Flügelarm, einem an den Flügelarm angelenkten inneren Arm, einem an den inneren Arm angelenkten äußeren Arm, einem doppelseitig beaufschlagbaren und an das Gerät mit seinem ersten Ende anschließbaren Hydraulikzylinder, einem ersten mit dem Flügelarm verbundenen und sich in der Betriebsstellung des Spurmarkierers nach oben erstreckenden Kniehebel, einem zweiten Kniehebel, einem inneren Steuerarm mit einem ersten und einem zweiten Ende, einem äußeren Steuerarm mit einem ersten und einem zweiten Ende, und mit einem ersten und einem zweiten Steuerhebel mit jeweils einem ersten und einem zweiten Ende, die mit ihren zweiten Enden an dem zweiten Ende des äußeren Steuerarmes angelenkt sind.

Spurmarkierer oder Spurreißer, wie diese ebenfalls bezeichnet werden, finden bei landwirtschaftlichen Geräten, wie Drillmaschinen oder Einzelkornsämaschinen, Verwendung. Derartige Geräte werden im Einsatz von einem Traktor über ein Feld gezogen und haben heute Arbeitsbreiten von mehreren Metern. Die Spurmarkierer finden sich in der Regel an beiden Seiten solcher Geräte und werden in eine Betriebsstellung ausgeklappt, in der sie sich seitlich nach außen erstrecken und eine Spur ziehen, die der Traktorfahrer in jedem nachfolgenden Durchgang ansteuert, um ein Übersäen oder ein Nichtbestellen zu verhindern. Die Spurweiten von Traktoren sind infolge der gesetzlichen Auflagen wesentlich kleiner, so daß bei wachsenden Arbeitsbreiten die Spurmarkierer immer länger und damit auch schwerer werden. Für Transportfahrten werden die Spurmarkierer in eine Transport- oder Ruhestellung geklappt, in der sie sich seitlich und teilweise oberhalb des Gerätes befinden. Bei geringeren Arbeitsbreiten sind zweifach klappbare Spurmarkierer ausreichend (US-A-4 530 405), die heutzutage infolge der noch größer werdenden Arbeitsbreiten durch dreifach klappbare ersetzt werden (US-A-4 207 950). Bei diesen bekannten Spurmarkierern wird das Ausklappen des äußeren Armes durch ein Kabel oder eine Kette gesteuert, die jedoch bei einem dreifach klappbaren oder aus drei Armen bestehenden Spurmarkierer nicht mehr das Einklappen des äußeren Armes steuern können, wenn der Spurmarkierer in seine Ruhestellung verbracht wird.

Bei dem dreifach klappbaren Spurmarkierer, von dem die Erfindung ausgeht (US-A-4 986 367), wird bereits kein Kabel oder keine Kette eingesetzt. An dem Flügelarm ist aber eine Schwenklasche angelenkt, an der der Hydraulikzylinder und der innere Steuerarm in einer Schlitzführung angreifen. Der zweite Kniehebel ist mit dem äußeren Arm fest verbunden, und der innere Arm und der innere Steuerarm sind an dem zweiten Kniehebel angelenkt. Außerdem ist der zweite Steuerhebel an den zweiten Kniehebel schwenkbar angeschlossen, und der erste Steuerhebel ist auf dem inneren Arm verschiebbar angeordnet. Damit ist dieser Spurmarkierer besonders teileaufwendig. Außerdem befindet sich der Hydraulikzylinder unterhalb des Flügelarmes und ist somit dem Bodenstaub verstärkt ausgesetzt. Zum Einklappen des Spurmarkierers in seine Transport- oder Ruhestellung muß die Kolbenstange aus dem Hydraulikzylinder ausgefahren werden. In der Ruhestellung verbleibt sie in der ausgefahrenen Stellung, weshalb bei längeren Ruhezeiten, z. B. nach dem Säen, die Kolbenstange der Umwelt ausgesetzt ist und ohne besondere Vorsichtsmaßnahmen leicht beschädigt werden, insbesondere rosten kann. Beim Einsatz kann sich außerdem auf dem inneren Arm leicht Schmutz ansammeln, der dann eine Schiebebewegung des ersten Steuerarmes ohne wiederholte Reinigung verhindert.

Mit der Erfindung sollen zumindest einige der vorgenannten Nachteile vermieden werden, weshalb nach der Erfindung der zweite Kniehebel mit dem Flügelarm fest verbunden ist und sich in der Betriebsstellung bodenwärts erstreckt und ein dritter Kniehebel mit dem inneren Arm fest verbunden ist und sich in der Betriebsstellung bodenwärts erstreckt, wobei das zweite Ende des Hydraulikzylinders an dem ersten Kniehebel, das erste Ende des inneren Steuerarmes an dem Gerät, das zweite Ende des inneren Steuerarmes an dem dritten Kniehebel, das erste Ende des äußeren Steuerarmes an dem zweiten Kniehebel, das erste Ende des ersten Steuerhebels an dem inneren Arm und das erste Ende des zweiten Steuerhebels an den äußeren Arm schwenkbar angeschlossen sind. Auf diese Weise nimmt der Hydraulikzylinder in der Betriebsstellung eine Lage oberhalb des Flügelarmes ein und ist in dieser Stellung weitgehend gegen Bodenschmutz geschützt. In der Transport- oder Ruhestellung liegt er oberhalb des Gerätes seitlich und innen neben dem Flügelarm und ist somit wiederum gegen Beschädigungen geschützt. Außerdem ist in dieser Stellung die Kolbenstange eingefahren, so daß sie den Umwelteinflüssen nicht ausgesetzt ist. Der Spurmarkierer benötigt relativ wenige Schwenkstellen sowie Schwenkteile und verzichtet auf sich aufeinander verschiebende Teile. Der zweite Steuerarm liegt in der Betriebs- oder Arbeitsstellung unterhalb des inneren und äußeren Armes, so daß beim Schwenkvorgang die maximale Höhe des Spurmarkierers reduziert ist. Bei einem Einfahren der Kolbenstange in den Hydraulikzylinder wird der Spurmarkierer von seiner gestreckten Betriebsstellung in seine eingeklappte Transportstellung verstellt, wobei der Flügelarm und der innere Arm im gleichen Drehsinn und der äußere Arm, der an seinem Ende mit der Einrichtung zum Ziehen der Spur versehen ist, im entgegengesetzten Drehsinn verschwenkt. Zum Verschwenken des Spurmarkierers aus seiner Ruhestellung in die Betriebsstellung wird der Hydraulikzylinder derart beaufschlagt, daß seine Kolbenstange ausgefahren wird.

Damit der Spurmarkierer in seiner Betriebsstellung Bodenunebenheiten folgen kann, ist er in festgelegten Grenzen höhenverschwenkbar, wozu vorgeschlagen wird, daß das erste Ende des inneren Steuerarmes in einem Schlitz verschiebbar ist, der an dem Gerät vorgesehen ist, wobei der Hydraulikzylinder über eine Knebelstange an das Gerät anschließbar ist.

Damit der Spurmarkierer in seiner Betriebsstellung nicht einknicken kann und bei einer Ausweichbewegung nach oben relativ steif bzw. starr ist, sieht die Erfindung ferner vor, daß die miteinander schwenkbar verbundenen Enden des inneren und des äußeren Armes mit je einem Anschlag versehen sind, die in der Betriebsstellung gegeneinander anliegen, wobei der Flügelarm mit einem Anschlag versehen ist, der in der Betriebsstellung gegen den dritten Kniehebel anliegt.

Der Flügelarm kann über eine Befestigungseinrichtung an das Gerät anschließbar sein. In einem solchen Fall schlägt die Erfindung noch vor, daß die Befestigungseinrichtung mit einer vertikal gerichteten Platte versehen ist, die den Schlitz aufweist, wobei die Knebelstange an der Befestigungseinrichtung angelenkt und gegen die Wirkung einer Feder verstellbar ist. Die Feder bewirkt eine weiche Schwenkbewegung, und die Befestigungseinrichtung kann an das Gerät so angeschlossen werden, daß sie bei zu großen Kräften abschert, wodurch Beschädigungen am Spurmarkierer vermieden werden.

In der Zeichnung ist ein nachfolgend näher erläutertes Ausführungsbeispiel der Erfindung dargestellt. Es zeigt:

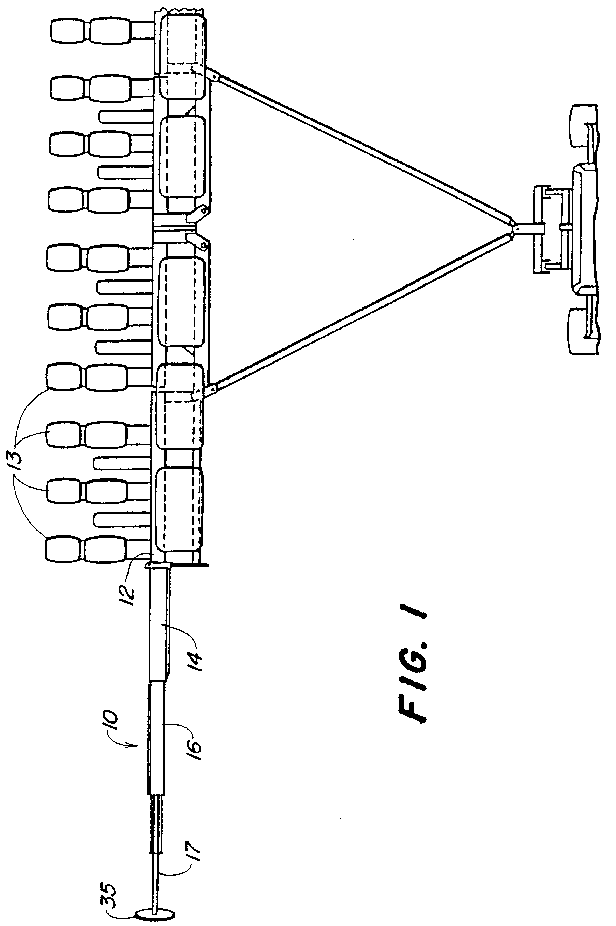

- Fig. 1: eine in der Landwirtschaft einsetzbare Sämaschine mit einem dreifach klappbaren Spurmarkierer,
- Fig. 2: den Spurmarkierer nach Fig. 1 in seiner obersten und in seiner untersten Betriebsstellung,
- Fig. 3: den Spurmarkierer in seiner eingeklappten Ruhestellung und in einer Zwischenstellung,
- Fig. 4: die Befestigungseinrichtung des Spurmarkierers an die Sämaschine in einer Stellung, in der der Spurmarkierer seine oberste Betriebsstellung einnimmt und
- Fig. 5: eine ähnliche Darstellung wie in Fig. 4, wobei sich der Spurmarkierer in seiner untersten Betriebsstellung befindet.

Ein dreifach klappbarer Spurmarkierer 10 ist an einen in der Landwirtschaft einsetzbaren Werkzeugträger 12 angeschlossen, der seinerseits eine Vielzahl von Bodenbestellgeräten 13, wie die verschiedensten Sägeräte mit zugehörigen Düngerausbringmitteln aufnehmen kann. Derartige Werkzeugträger werden im Einsatz von einem Traktor über das zu bestellende Feld geführt und haben eine beträchtliche Breite. Die Arbeitsbreite ist damit erheblich größer als die Traktorspur, und der Traktor wird nach der von dem Spurmarkierer oder dem Spurreißer vorgezeichneten Spur gesteuert.

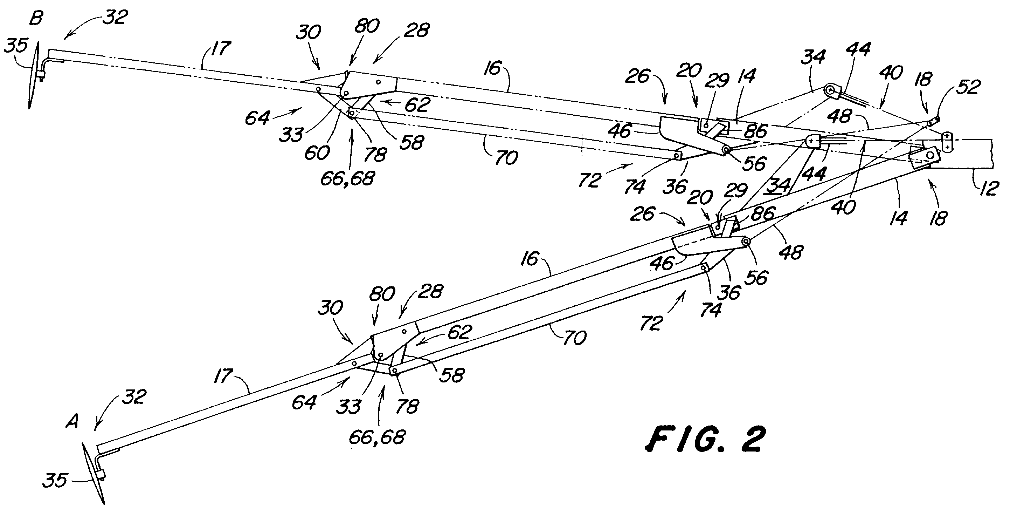

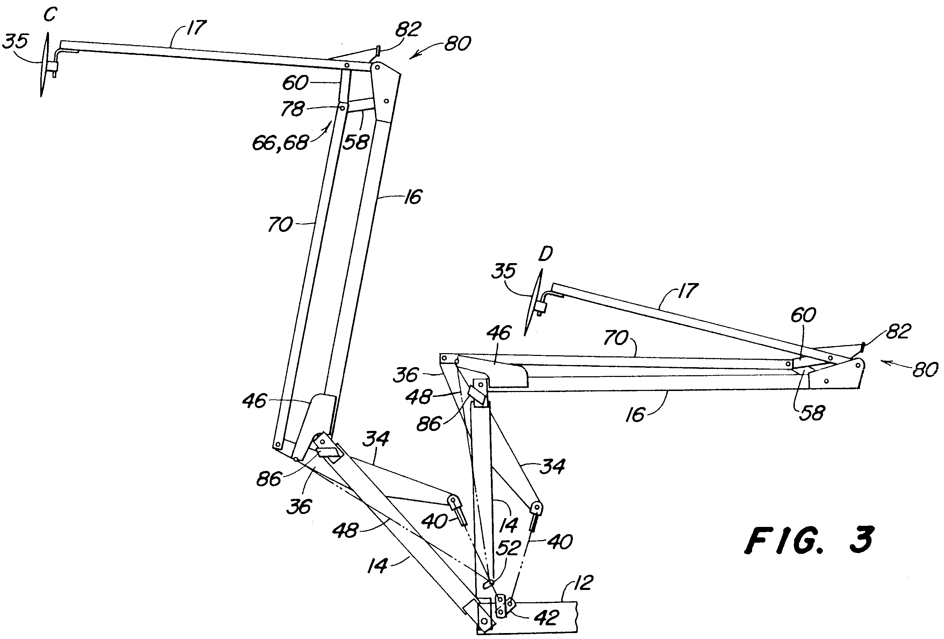

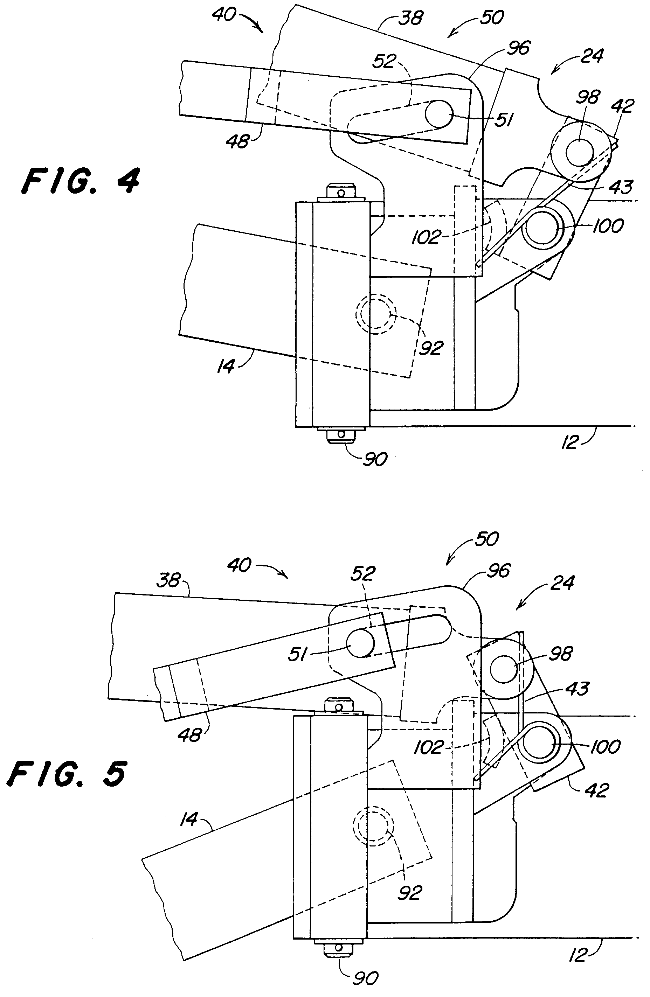

Der im einzelnen in den Fig. 2 und 3 erkennbare Spurmarkierer 10 besteht im wesentlichen aus drei Armsegmenten, und zwar einem Flügelarm 14, einem inneren Arm 16 und einem äußeren Arm 17. Der Flügelarm 14 hat ein erstes und ein zweites Ende 18 und 20 und ist mit seinem ersten Ende 18 an den Werkzeugträger 12 vertikal schwenkbar über eine in den Fig. 4 und 5 am besten erkennbare Befestigungseinrichtung 24 angeschlossen. Der innere Arm 16 hat ein erstes und ein zweites Ende 26 und 28 und ist mit seinem ersten Ende 26 bei 29 an das zweite Ende 20 des Flügelarmes 14 vertikal schwenkbar angeschlossen. Der äußere Arm 17 hat ebenfalls ein erstes und ein zweites Ende 30 und 32 und ist mit seinem ersten Ende 30 bei 33 vertikal schwenkbar an das zweite Ende 28 des inneren Armes 16 angeschlossen. An dem zweiten Ende 32 des äußeren Armes 17 greift die Einrichtung zum Markieren der Spur in Form einer drehbaren Markierungsscheibe 35 an.

In den Fig. 2 und 3 ist nicht erkennbar, daß die Markierungsscheibe 35 ein- und ausschiebbar bzw. teleskopisch an den äußeren Arm 17 angeschlossen ist. Eine solche zusätzliche Verstellung, die aus einem einfachen Verlängerungsrohr bestehen kann, gibt der Bedienungsperson die Möglichkeit, den Spurmarkierer an unterschiedliche Arbeitsbreiten besser anpassen bzw. die Spur nach ihren Wünschen besser ansteuern zu können.

Der Flügelarm 14 ist mit einem ersten und einem zweiten Kniehebel 34 und 36 ausgestattet. In der Betriebsstellung nach Fig. 2 zeigt der erste Kniehebel 34 nach oben und nach rechts, während der zweite Kniehebel 36 nach unten und nach links gerichtet ist. Die Verstellung des Spurmarkierers 10 aus seiner Betriebsstellung nach Fig. 2 in seine Transportstellung nach Fig. 3 bzw. umgekehrt, erfolgt durch einen doppelseitig beaufschlagbaren Hydraulikzylinder 40, dessen zylinderseitiges Ende 38 über eine Knebelstange 42 an den Werkzeugträger 12 bzw. an die Befestigungseinrichtung 24 und dessen kolbenstangenseitiges Ende 44 an den ersten Kniehebel 34 schwenkbar angeschlossen ist. Damit liegt der Hydraulikzylinder 40 in seiner Betriebsstellung oberhalb des Flügelarmes 14 und bei einem Ein- oder Ausfahren der Kolbenstange wird der Flügelarm 14 gegenüber dem Werkzeugträger 12 gedreht. Die Knebelstange 42 steht dabei unter der Wirkung einer Torsionsfeder 43, die die Knebelstange 42 nach außen von dem Werkzeugträger 12 fortdrücken will. Die Knebelstange 42 und der Hydraulikzylinder 40 sind am besten in den Fig. 4 und 5 erkennbar. In den Fig. 2 und 3 ist die Lage des Hydraulikzylinders 40 lediglich strichpunktiert angedeutet.

Die Torsionsfeder 43 drückt die Knebelstange 42 nach außen von dem Werkzeugträger 12, wie es in Fig. 5 angedeutet ist. Allerdings ist die Federkraft nicht so groß, daß sie die Kraft des Hydraulikzylinders 40 überwinden könnte, und, wenn der Spurmarkierer 10 aus seiner Betriebsstellung in seine Transport- oder Ruhestellung geklappt wird, wechseln der Hydraulikzylinder 40 und der Knebelhebel von einem Zugglied zu einem Druckglied, da die Schwerpunktslage des Markierers über die Mitte geht. Bei dieser Bewegung dreht die Feder den Knebelhebel 42 von dem Werkzeugträger 12 fort, und zwar in eine Außenbordstellung, in der der Knebelhebel für den Rest des Faltzyklus verbleibt. Dadurch, daß die Knebelstange 42 eine Außenbordstellung einnehmen kann, die durch die Torsionsfeder sichergestellt ist, wird ein weicheres Ausklappen erreicht, wenn der Spurmarkierer aus seiner Ruhestellung in seine Betriebsstellung verschwenkt wird.

Das erste Ende 26 des inneren Armes 16 ist mit einem dritten Kniehebel 46 versehen, und ein innerer Steuerarm 48 hat ein erstes Ende 50 mit einem Schwenkstift 51. Dieser ist in einem Schwimmschlitz 52 eingesetzt, über den das erste Ende 50 des Steuerarmes 48 mit dem Werkzeugträger 12 bzw. mit der Befestigungseinrichtung 24 gekuppelt ist. Das zweite Ende 54 des Steuerarmes 48 ist bei 56 schwenkbar an den dritten Kniehebel 46 angeschlossen, und bei einem Ein- oder Ausfahren der Kolbenstange des Hydraulikzylinders 40 verschwenkt der innere Steuerarm 48 den inneren Arm 16 relativ zu dem Flügelarm 14, wenn der innere Steuerarm die Grenzen der Schwimmstellung, wie sie durch den Schwimmschlitz bestimmt sind, erreicht hat.

Die ersten Enden zweier Schwenkhebel oder Steuerhebel 58 und 60 sind mit 62 und 64 bezeichnet. Sie sind an den äußeren und inneren Armen 16 und 17 angelenkt. Die zweiten Enden der Schwenkhebel 58 und 60 sind mit 66 und 68 bezeichnet. Ein äußerer Steuerarm 70 ist mit seinem ersten Ende 72 bei 74 an den zweiten Kniehebel 36 schwenkbar angeschlossen und bei 78 mit seinem zweiten Ende 76 an die zweiten Enden 66 und 68 der Schwenkhebel 58 und 60. Der äußere Steuerarm 70 bewirkt eine Relativverschwenkung des äußeren Armes 17 mit Bezug auf den inneren Arm 16, wenn die Kolbenstange des Hydraulikzylinders 40 ein- oder ausgefahren wird.

In seiner Betriebsstellung kann der Spurmarkierer in einem begrenzten Maße sich nach oben oder nach unten bewegen, um Bodenunebenheiten folgen zu können. In Fig. 2 ist die tiefste Stellung mit A und die höchste Stellung mit B bezeichnet. Bei einem normalen Einsatz nimmt der Spurmarkierer eine Schwimmstellung zwischen diesen beiden Extremen ein. Der Schwimmbereich wird durch den Schwimmschlitz 52 und den Knebelhebel 42 bestimmt. Wenn sich der Spurmarkierer auf- und abbewegt, ermöglichen diese beiden Anschlüsse eine Reihe von Totgangstellungen.

Die inneren und äußeren Arme 16 und 17 sind in der Betriebsstellung durch einen äußeren Anschlag 80 starr gestellt, so daß sie nicht nach oben ausknicken können. Der äußere Anschlag 80 wird durch zwei Anschlagplatten gebildet, die mit dem äußeren und dem inneren Arm 16, 17 verschweißt sind. Lediglich die mit dem äußeren Arm 17 verbundene Anschlagplatte 82 ist in Fig. 3 erkennbar, da die andere durch den die Befestigungsstelle 33 bildenden Flansch verdeckt ist. In der Betriebsstellung liegt der Spurmarkierer mit seiner Markierungsscheibe 35 auf dem Boden auf, wodurch der äußere Arm 17 nach oben ausweichen will, was dadurch verhindert wird, daß bei einer Drehbewegung des äußeren Armes 17 um die Stelle 33 die äußere Anschlagplatte 82 gegen die Anschlagplatte an dem inneren Arm 16 zur Anlage kommt.

Der Flügelarm 14 ist mit einem inneren Anschlag 86 versehen. Dieser besteht aus einer Platte, die mit dem Flügelarm 14 verschweißt ist und sich von diesem aus derart erstreckt, daß ein Kontakt mit der Oberseite des dritten Kniehebels 46 entsteht, wenn der Flügelarm und der innere Arm 16 axial zueinander ausgerichtet sind. Die vom Boden herrührende und nach oben wirkende Kraft will den äußeren Steuerarm nach oben verschwenken, wobei der innere Arm gegen den inneren Anschlag 86 zur Anlage kommt.

Zum Verstellen des Spurmarkierers aus seiner Betriebsstellung in seine Transport- oder Ruhestellung wird die Kolbenstange des Hydraulikzylinders eingefahren. Der Spurmarkierer 10 wird zunächst seine gestreckte Lage beibehalten, bis das Ende des Schwimmbereichs - Stellung B in Fig. 2 - erreicht ist. Bei einem weiteren Verschwenken des Flügelarmes 14 im Uhrzeigerdrehsinn wird infolge des inneren Steuerarmes 48 der innere Arm 16 um seine Anschlußstelle 29 relativ zu dem Flügelarm 14 im Uhrzeigerdrehsinn verstellt und gleichzeitig der äußere Arm 17 infolge des äußeren Steuerarmes 70 um seine Anschlußstelle 33 relativ zu dem inneren Arm 16 und entgegen dem Uhrzeigerdrehsinn, wobei zunächst die in Fig. 3 mit C bezeichnete Zwischenstellung erreicht wird. Diese gesteuerten Bewegungen setzen sich bei einem weiteren Einfahren der Kolbenstange fort, bis daß der Spurmarkierer seine Transport- oder Ruhestellung D erreicht hat, in der der Flügelarm 14 mit Bezug auf Fig. 3 eine etwa vertikale Stellung und der innere Arm 16 eine etwa horizontale Stellung oberhalb des Werkzeugträgers einnehmen. In der Ruhestellung ist der Hydraulikzylinder eingefahren, und seine Kolbenstange ist keinen Umwelteinflüssen ausgesetzt, was bei längerer Nichtbenutzung von Bedeutung ist.

Die Befestigungseinrichtung 24 für den Flügelarm 14 ist im einzelnen in den Fig. 4 und 5 dargestellt. Sie ist über einen vertikal gerichteten Stift 90 an den Werkzeugträger 12 angeschlossen. Ein axial zu dem Werkzeugträger ausgerichteter horizontaler Stift verbindet außerdem noch eine Öse am Werkzeugträger mit einer Öse an der Befestigungseinrichtung. Dieser Stift und die beiden Ösen sind in der Zeichnung nicht erkennbar. Der Stift ist als Scherstift ausgebildet, der bei einer bestimmten auf den Spurmarkierer einwirkenden Kraft wegbricht, um Beschädigungen am Spurmarkierer zu vermeiden.

Die Befestigungseinrichtung 24 ist ferner noch mit einem horizontal verlaufenden Schwenkzapfen 92, der zu einem schwenkbaren Anschluß des Flügelarmes 14 dient, und mit einem nach oben überstehenden Plattenteil 96 versehen, in dem der Schwimmschlitz 52 eingeformt ist. Das erste Ende 50 des ersten Steuerarmes 48 ist als Gabelkopf ausgebildet, der den vertikalen Plattenteil 96 umgreift, wobei der Schwenkstift 51 in den Gabelkopf eingesetzt und in dem Schwimmschlitz 52 verstellbar ist.

Das zylinderseitige Ende des Hydraulikzylinders 40 ist ebenfalls als Gabelkopf ausgebildet, der die Knebelstange 42 umgreift. Ein Schwenkzapfen 98 verbindet die Knebelstange 42 mit dem Hydraulikzylinder 40. Das andere Ende der Knebelstange 42 ist schwenkbar zwischen zwei Ösen an der Befestigungseinrichtung 24 gelagert und mit diesen über einen Schwenkzapfen 100 verbunden. Zwischen diesen beiden Ösen an der Befestigungseinrichtung 24 ist noch ein gebogener Anschlagteil 102 vorgesehen, gegen den die Knebelstange 42 zur Anlage kommt und der die Drehbewegung der Knebelstange blockiert, wenn der Schwenkstift 51 die Enden des Schwimmschlitzes 52 erreicht, wie es in den Fig. 4 und 5 dargestellt ist.

## Patentansprüche

1. Zwischen einer Betriebsstellung und einer Ruhestellung klappbarer Spurmarkierer (10) für ein landwirtschaftliches Gerät mit einem an das Gerät anlenkbaren Flügelarm (14), einem an den Flügelarm (14) angelenkten inneren Arm (16), einem an den inneren Arm (16) angelenkten äußeren Arm (17), einem doppelseitig beaufschlagbaren und an das Gerät mit seinem ersten Ende anschließbaren Hydraulikzylinder (40), einem ersten mit dem Flügelarm (14) verbundenen und sich in der Betriebsstellung des Spurmarkierers (10) nach oben erstreckenden Kniehebel (34), einem zweiten Kniehebel (36), einem inneren Steuerarm (48) mit einem ersten und einem zweiten Ende, einem äußeren Steuerarm (70) mit einem ersten und einem zweiten Ende und mit einem ersten und einem zweiten Steuerhebel (58, 60) mit jeweils einem ersten und einem zweiten Ende, die mit ihren zweiten Enden an dem zweiten Ende des äußeren Steuerarmes (70) angelenkt sind, dadurch gekennzeichnet, daß der zweite Kniehebel (36) mit dem Flügelarm (14) fest verbunden ist und sich in der Betriebsstellung bodenwärts erstreckt und daß ein dritter Kniehebel (46) mit dem inneren Arm (16) fest verbunden ist und sich in der Betriebsstellung bodenwärts erstreckt, wobei das zweite Ende des Hydraulikzylinders (40) an dem ersten Kniehebel (34), das erste Ende des inneren Steuerarmes (48) an dem Gerät, das zweite Ende des inneren Steuerarmes (48) an dem dritten Kniehebel (46), das erste Ende des äußeren Steuerarmes (70) an dem zweiten Kniehebel (36), das erste Ende des ersten Steuerhebels (58) an dem inneren Arm (16) und das erste Ende des zweiten Steuerhebels (60) an den äußeren Arm (17) schwenkbar angeschlossen sind.

2. Spurmarkierer nach Anspruch 1, dadurch gekennzeichnet, daß das erste Ende des inneren Steuerarmes (48) in einem Schlitz (52) verschiebbar ist, der an dem Gerät vorgesehen ist.

3. Spurmarkierer nach Anspruch 2, dadurch gekennzeichnet, daß der Hydraulikzylinder (40) über eine Knebelstange (42) an das Gerät anschließbar ist.

4. Spurmarkierer nach einem oder mehreren der vorherigen Ansprüche, dadurch gekennzeichnet, daß die miteinander schwenkbar verbundenen Enden des inneren und des äußeren Armes (16, 17) mit je einem Anschlag (80) versehen sind, die in der Betriebsstellung gegeneinander anliegen und in der Betriebsstellung ein Ausknicken des äußeren Armes (17) nach oben verhindern.

5. Spurmarkierer nach Anspruch 4, dadurch gekennzeichnet, daß der Flügelarm (14) mit einem Anschlag (86) versehen ist, der in der Betriebsstellung gegen den dritten Kniehebel (46) anliegt und in der Betriebsstellung ein Ausknicken des inneren Armes (16) nach oben verhindert.

6. Spurmarkierer nach Anspruch 2 und 3, wobei der Flügelarm (14) über eine Befestigungseinrichtung (24) an das Gerät anschließbar ist, dadurch gekennzeichnet, daß die Befestigungseinrichtung (24) mit einer vertikal gerichteten Platte (96) versehen ist, die den Schlitz (52) aufweist, wobei die Knebelstange (42) an der Befestigungseinrichtung (24) angelenkt und gegen die Wirkung einer Feder (43) verstellbar ist.

## Claims

1. A row marker (10) for an agricultural implement and which can be folded between an operating position and a rest position, with a wing arm (14) which can be pivoted on the implement, an inner arm (16) pivoted on the wing arm (14), an outer arm (17) pivoted on the inner arm (16), a double-acting hydraulic cylinder (40) which can be attached at its first end to the implement, a first crank lever (34) connected to the wing arm (14) and extending upwardly in the operating position of the row marker (10), a second crank lever (36), an inner control arm (48) with first and second ends, an outer control arm (70) with first and second ends and first and second control levers (58, 60), each having first and second ends and being pivoted at their second ends to the second end of the outer control arm (70), characterized in that the second crank lever (36) is fixed to the wing arm (14) and extends towards the ground in the operating position and in that a third crank lever (46) is fixed to the inner arm (16) and extends towards the ground in the operating position, wherein the second end of the hydraulic cylinder (40) is pivotally connected to the first crank lever (34), the first end of the inner control arm (48) is pivotally connected to the implement, the second end of the inner control arm (48) is pivotally connected to the third crank lever (46), the first end of the outer control arm (70) is pivotally connected to the second crank lever (36), the first end of the first control lever (58) is pivotally connected to the inner arm (16) and the first end of the second control lever (60) is pivotally connected to the outer arm (17).

2. A row marker according to claim 1, characterized in that the first end of the inner control arm (48) can move in a slot (52) provided on the implement.

3. A row marker according to claim 2, characterized in that the hydraulic cylinder (40) can be connected to the implement through a link bar (42).

4. A row marker according to one or more of the preceding claims, characterized in that the ends of the inner and outer arms (16, 17) which are pivotally connected together are each provided with a stop (80), which stops bear on one another in the operating position and prevent the outer arm (17) folding upwardly in the operating position.

5. A row marker according to claim 4, characterized in that the wing arm (14) is provided with a stop (86) which bears against the third crank lever (46) in the operating position and prevents the inner arm (16) folding upwardly in the operating position.

6. A row marker according to claim 2 and 3, wherein the wing arm (14) can be attached to the implement by an attachment device (24), characterized in that the attachment device (24) is provided with a vertically upstanding plate (96) having the slot (52), wherein the link bar (42) is pivoted on to the attachment device (24) and is adjustable against the action of a spring (43).

## Revendications

1. Marqueur de sillons (10) pouvant être rabattu entre une position de fonctionnement et une position de repos, pour un engin agricole, comportant un bras en aile (14) articulé sur l'engin, un bras intérieur (16) articulé sur le bras en aile (14), un bras extérieur (17) articulé sur le bras intérieur (16), un vérin hydraulique (40) pouvant être chargé sur ses deux côtés et pouvant être raccordé par sa première extrémité à l'engin, un premier levier coudé (34) qui est relié au bras en aile (14) et s'étend vers le haut lorsque le marqueur de sillons (10) est dans la position de fonctionnement, un second levier coudé (36), un bras intérieur de commande (48) comportant des première et seconde extrémités, un bras extérieur de commande (70) comportant des première et seconde extrémités, et des premier et second leviers de commande (58,60) comportant chacun des première et seconde extrémités et qui sont articulés, par leurs secondes extrémités, à la seconde extrémité du bras extérieur de commande (70), caractérisé en ce que le second levier coudé (36) est relié de façon fixe au bras en aile (14) et s'étend vers le sol, dans la position de fonctionnement, et qu'un troisième levier coudé (46) est relié de façon fixe au bras intérieur (16) et s'étend en direction du sol dans la position de fonctionnement, la seconde extrémité du vérin hydraulique (40) étant raccordée de façon articulée au premier levier coudé (34), la première extrémité du bras intérieur de commande (48) étant raccordée de façon à pouvoir basculer à l'engin, la seconde extrémité du bras intérieur de commande (48) étant raccordée de manière à pouvoir basculer au troisième levier coudé (46), la première extrémité du bras extérieur de commande (70) étant raccordée de façon à pouvoir basculer au second levier coudé (36), la première extrémité du premier levier de commande (58) étant raccordée de façon à pouvoir basculer au bras intérieur (16), et la première extrémité du second levier de commande (60) étant raccordée de manière à pouvoir basculer au bras extérieur (17).

2. Marqueur de sillons selon la revendication 1, caractérisé en ce que la première extrémité du bras intérieur de commande (48) peut être déplacée dans une fente (52), qui est prévue dans l'engin.

3. Marqueur de sillons selon la revendication 2, caractérisé en ce que le vérin hydraulique (40) peut être raccordé à l'engin par l'intermédiaire d'une barre articulée (42).

4. Marqueur de sillons selon une ou plusieurs des revendications précédentes, caractérisé en ce que les extrémités, reliées entre elles de manière à pouvoir basculer, des bras intérieur et extérieur (16,17) sont équipés de butées respectives (80), qui, dans la position de fonctionnement, s'appliquent l'une contre l'autre et, dans la position de fonctionnement, empêchent une déviation du bras extérieur (17) vers le haut.

5. Marqueur de sillons selon la revendication 4, caractérisé en ce que le bras en aile (14) comporte une butée (86), qui, dans la position de fonctionnement, s'applique contre le troisième levier coudé (46) et, dans la position de fonctionnement, empêche une déviation du bras intérieur (16) vers le haut.

6. Marqueur de sillons selon les revendications 2 et 3, dans lequel le bras en aile (14) peut être raccordé à l'engin par l'intermédiaire d'un dispositif de fixation (24), caractérisé par le fait que le dispositif de fixation (24) comporte une plaque verticale (96), qui possède la fente (52), la barre articulée (42) étant articulée sur le dispositif de fixation (24) et pouvant être déplacée à l'encontre de l'action d'un ressort (43).
